# EUROPÄISCHE PATENTSCHRIFT

(11) **EP 1 745 535 B1**
(45) Veröffentlichungstag und Bekanntmachung des Hinweises auf die Patenterteilung: **28.10.2009**
(21) Anmeldenummer: 05716467.5
(22) Anmeldetag: 31.03.2005
(51) Int. Cl.: H02H 7/085, H02H 6/00

(54) **VORRICHTUNG ZUM SCHUTZ VOR THERMISCHER ÜBERLASTUNG**
DEVICE FOR PROTECTION AGAINST THERMAL OVERLOAD
DISPOSITIF DE PROTECTION CONTRE LA SURCHARGE THERMIQUE

(30) Priorität: 03.05.2004 DE 102004022005
(43) Veröffentlichungstag der Anmeldung: 24.01.2007
(73) Patentinhaber: Etel S.A., 2112 Môtiers (CH)
(72) Erfinder: COLEMAN, Ralph, CH-2114 Fleurier (CH)
(74) Vertreter: Pleyer, Hans Anno
(86) Internationale Anmeldenummer: PCT/EP2005/003361
(87) Internationale Veröffentlichungsnummer: WO 2005/109592

(56) Entgegenhaltungen:
- DE-A1- 2 854 701
- US-A- 4 939 437
- US-A1- 2002 195 889

## Beschreibung

Die Erfindung betrifft eine Vorrichtung zum Schutz von mit wenigstens zwei Phasenströmen arbeitenden Systemen vor thermischer Überlastung gemäß dem Oberbegriff des Anspruches 1. Solche Vorrichtungen dienen z.B. zur Überwachung von Elektromotoren und deren Ansteuerelektroniken. Fließen in einem solchen System zu hohe Ströme für eine zu lange Zeit, können thermische Überlastungen auftreten.

Elektromotoren und deren Ansteuerelektroniken (z.B. Frequenzumrichter) werden häufig an der Grenze ihrer Leistungsfähigkeit betrieben, um mit gegebenem Aufwand (Gewicht, Volumen, Kosten) ein Maximum an Leistung des Elektromotors zu erhalten. Dabei ist es wichtig, den Elektromotor und seine Ansteuerelektronik nicht zu überhitzen. Steigt die Temperatur über einen gewissen Grenzwert, so werden entweder die Isolation der Windungen des Elektromotors oder auch die Leistungshalbleiter in der Ansteuerelektronik in Mitleidenschaft gezogen. Dies führt unmittelbar oder auch erst nach einer gewissen Zeit zur Zerstörung des Motors oder seiner Ansteuerelektronik.

Es sind daher bereits Vorrichtungen bekannt, mit denen die Temperatur der Windungen eines Elektromotors bzw. der Leistungshalbleiter überwacht werden können. Steigt die Temperatur über einen Grenzwert, so kann die Leistung des Motors verringert und eine Beschädigung vermieden werden.

Naheliegenderweise kann eine solche Temperaturüberwachung mittels eines Temperatursensors durchgeführt werden. Solche Lösungen sind aber aufwändig, da sie einen oder gar mehrere zusätzliche Sensoren benötigen, die wiederum über zusätzliche elektrische Leitungen mit einer Auswerteeinheit verbunden werden müssen. Auch ist die richtige Platzierung eines solchen Sensors oft schwierig, da der Ort der höchsten auftretenden Temperatur nicht zugänglich oder nicht bekannt ist, und vom jeweiligen Betriebszustand abhängt. Zudem weisen Temperatursensoren eine gewisse Trägheit auf, so dass mit kurzen und starken Stromspitzen ein Motor zerstört werden kann, noch bevor ein Temperatursensor anspricht.

Es sind auch Vorrichtungen bekannt, die ohne einen Temperatursensor auskommen. Zum Betreiben eines Elektromotors wird häufig mittels eines Stromsensors der in den jeweiligen Motorphasen fließende Strom gemessen. Bei bekanntem Innenwiderstand der Motorphasen bzw. der Leistungshalbleiter lässt sich aus den gemessenen Strömen die Verlustleistung in den Windungen bzw. der Leistungshalbleiter berechnen. Mit einem einfachen thermischen Modell kann dann auf die jeweilige Temperatur geschlossen werden. Durch das Setzen einer Grenze für die pro Zeitintervall erzeugt Verlustenergie kann der Motor und seine Ansteuerelektronik vor Überhitzung geschützt werden.

Die US3808503 zeigt auf, wie mit Kondensatoren und Widerständen ein thermisches Modell eines Motors aufgebaut werden kann. Führt man an bestimmten Knoten eines solchen Modells einen Strom zu, der dem Quadrat des Phasenstromes proportional ist, so lässt sich eine Spannung erzeugen, die der Motortemperatur proportional ist und zur Überwachung herangezogen werden kann. Das beschriebene Modell verwendet jedoch lediglich einen Motorstrom, der aus der Summe der Einzelströme gebildet ist, und erlaubt damit nicht eine optimale Ausnutzung des Motors. Es wird nämlich nicht berücksichtigt, dass in manchen Betriebszuständen (z.B. stehender oder blockierter Motor unter Last) die Abwärme hauptsächlich in nur einer Phase entsteht, in anderen Betriebszuständen (schnell drehender Motor) aber gleichmäßig über alle Phasen verteilt ist. Für den ersten Fall muss daher die Grenztemperatur für das Modell vorsorglich niedriger gewählt werden als im zweiten Fall eigentlich nötig.

Ein schnell drehender 3-phasiger Motor mit gleichmäßiger Verteilung der Abwärme auf alle Phasen kann nämlich erfahrungsgemäß 1,2 - 1,5 mal mehr Verlustleistung verkraften als ein blockierter Motor unter Last, bei dem die Abwärme sehr unsymmetrisch auf die Phasen verteilt ist. Von einer gleichmäßigen Verteilung der Abwärme kann z.B. bei Elektromotoren ausgegangen werden, die mit einer Phasenstromfrequenz von mehr als ca. 1 Hz (für Motorwicklungen mit hoher Wärmekapazität) bis ca. 5 Hz (für Motorwicklungen mit kleiner Wärmekapazität) arbeiten.

Dies gilt auch für die in der US2002/0195889A1 offenbarte Schutzschaltung für einen Linearmotor. Es wird hier eine Überwachung von quadrierten und aufintegrierten Phasenströmen vorgeschlagen. Diese Art der Überwachung wird auch als I²t-Überwachung bezeichnet. Es wird angeregt, möglichst jede Phase separat zu überwachen, um auch einen blockierten Motor zu erfassen. Auch hier muss aber der Grenzwert für jede Phase so niedrig gewählt werden, dass bei asymmetrischer Abwärmeerzeugung eine thermische Überlastung vermieden wird.

Aufgabe der Erfindung ist es, eine Vorrichtung zum Schutz eines mit wenigstens zwei Phasenströmen arbeitenden Systems vor thermischer Überlastung zu schaffen, das eine bessere Auslastung des Systems erlaubt.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Die Vorrichtung zum Schutz eines mit wenigstens zwei Phasenströmen arbeitenden Systems vor thermischer Überlastung weist wenigstens zwei Quadrierer zum Quadrieren der einzelnen Phasenströme und wenigstens zwei erste Integrierer zum Integrieren von aus den quadrierten Phasenströmen abgeleiteten Signalen auf. Die Vorrichtung weist ferner einen zweiten Integrierer zum Integrieren eines von der Summe aller quadrierten Phasenströme abgeleiteten Summensignals auf, sowie eine Verknüpfung der Ausgänge der ersten und zweiten Integrierer zu einem Vergleichssignal C, mit dem die thermische Überlastung des Systems überwacht werden kann.

Durch die Integration der einzelnen quadrierten Phasenströme einerseits und die Integration der Summe aller quadrierten Phasenströme andererseits, sowie durch die geeignete Verknüpfung der Ausgänge der Integrierer kann sichergestellt werden, dass die thermische Überwachung in jedem Betriebszustand die jeweils maximal erlaubte Verlustleistung im überwachten System erlaubt, die dauerhaft vom System abgegeben werden kann, ohne zu überhitzen. Die Ausnutzung des Systems wird dadurch im Vergleich zum Stand der Technik deutlich verbessert.

Als überwachtes System kommt beispielsweise ein mehrphasiger Elektromotor, insbesondere ein linearer oder rotatorischer Direktantrieb, ebenso in Frage wie die Ansteuerelektronik für einen solchen Motor, in der vor allem die Leistungshalbleiter, die die verschiedenen Motorphasen ansteuern, von einer thermischen Überlastung bedroht sind.

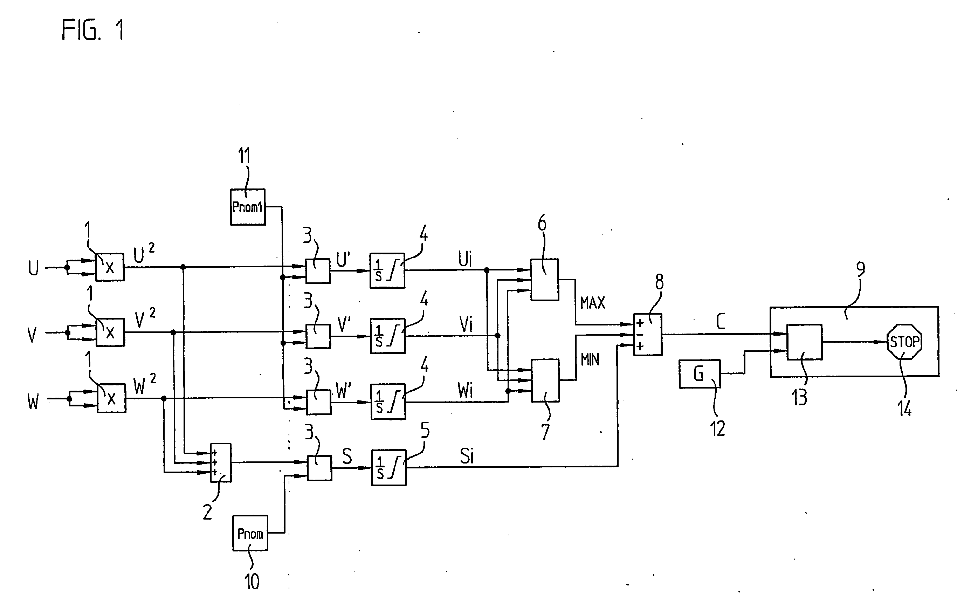

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: eine Vorrichtung zum Schutz vor thermischer Überlastung.

Die Figur 1 zeigt eine Vorrichtung oder Schaltung zum Schutz vor thermischer Überlastung eines dreiphasigen Systems. Diese Schaltung kann mit diskreten Bauteilen aufgebaut werden, oder auch bevorzugt vollständig in Software realisiert werden.

Am Eingang der Schaltung liegen drei Signale U, V, W an, die den Phasenströmen des zu überwachenden Systems proportional sind. Jedes dieser Signale U, V, W wird zunächst in je einem Quadrierer 1 quadriert.

Diese quadrierten Signale U², V², W² werden in einem Addierer 2 aufsummiert. Von der Summe der quadrierten Phasenströme wird in einem Subtrahierer 3 ein in einem ersten Speicher 10 gespeicherter Parameter Pnom abgezogen. Dieser Parameter Pnom entspricht der maximalen thermischen Verlustleistung des überwachten Systems, die bei gleichmäßiger Verteilung der Abwärme über alle Phasen dauerhaft vom System abgegeben werden kann, ohne zu überhitzen. Pnom kann daher auch als Nennverlustleistung des Systems bezeichnet werden. Die so erhaltene Differenz wird als Summensignal S einem zweiten Integrierer 5 zugeführt, dort ein integriertes Summensignal Si gebildet und als Ausgang zur Verfügung gestellt. Der zweite Integrierer 5 ist nach unten begrenzt und kann keine negativen Werte annehmen.

Von den Ausgängen aller Quadrierer 1, also von den Signalen U², V², W², wird außerdem in jeweils einem weiteren Subtrahierer 3 ein in einem zweiten Speicher 11 gespeicherter Parameter Pnom1 abgezogen. Dieser Parameter Pnom1 entspricht der maximalen thermischen Verlustleistung einer einzelnen Phase U, V, W des Systems bei 0 Hz Phasenfrequenz (also beispielsweise bei Stillstand eines Elektromotors), die dauerhaft von dieser Phase U, V, W abgegeben werden kann, ohne zu überhitzen. Pnom1 könnte daher auch als Nennverlustleistung einer Phase U, V, W bezeichnet werden.

Die so gebildeten, letztlich aus U, V, W abgeleiteten Signale U', V', W' werden jeweils ersten Integrierern 4 zugeführt. Diese ersten Integrierer 4 sind wie der zweite Integrierer 5 nach unten begrenzt und können keine negativen Werte annehmen. Am Ausgang der ersten Integrierer 4 stehen die integrierten Signale Ui, Vi, Wi zur Verfügung.

Ein Maximumbildner 6 wählt aus diesen integrierten Signalen Ui, Vi, Wi den größten Wert MAX aus, ein Minimumbildner 7 wählt aus den integrierten Signalen Ui, Vi, Wi den kleinsten Wert MIN aus.

In einem Verknüpfer 8 wird vom größten Wert MAX der kleinste Wert MIN abgezogen. Außerdem wird im Verknüpfer 8 das integrierte Summensignal Si des zweiten Integrierers 5 zur Differenz aus den Signalen MAX und MIN hinzuaddiert. Am Ausgang des Verknüpfers 8 steht damit ein Vergleichssignal C zur Verfügung.

Der Maximumbildner 6, der Minimumbildner 7 und der Verknüpfer 8 bilden eine Verknüpfung der Ausgangssignale Ui, Vi, Wi, Si der ersten und zweiten Integrierer 4, 5 zum Feststellen einer thermischen Überlastung des Systems.

Ein Auswerter 9 enthält einen Vergleicher 13, der das Vergleichssignal C mit einem in einem dritten Speicher 12 abgelegten Grenzwert G vergleicht. Liegt der Vergleichswert C über dem Grenzwert G, so droht eine thermische Überlastung. Mittel zum Abschalten 14 können dann entsprechend reagieren, in dem etwa die Energiezufuhr zum Elektromotor unterbrochen oder zumindest reduziert wird. Eine thermische Überlastung kann so zuverlässig vermieden werden.

Durch die Integration der einzelnen abgeleiteten Signale U', V', W' in den ersten Integrieren 4 und der nachfolgenden Differenzbildung aus dem größten und kleinsten Integral MAX - MIN erkennt die Vorrichtung eine unsymmetrische Abwärmeverteilung. Solange nämlich die Abwärme in allen Phasen U, V, W gleichmäßig verteilt ist, wird MAX = MIN sein und damit MAX - MIN verschwinden. Es wird dann nur das integrierte Summensignal Si gegen den Grenzwert G verglichen. Bei ungleichmäßiger Abwärmeverteilung wird es aber unterschiedlich große integrierte Signale Ui, Vi, Wi geben, und damit einen Beitrag MAX - MIN, der größer als Null ist. Dieser wird dann zum integrierten Summensignal Si addiert, bevor der Vergleich mit dem Grenzwert G stattfindet.

Die Nennverlustleistung Pnom im ersten Speicher 10 kann also nun wirklich für den Fall gleichmäßiger Wärmeverteilung in allen Phasen U, V, W ausgelegt werden. Nur wenn tatsächlich eine Unsymmetrie vorliegt, wird der dadurch entstehende zusätzliche Wärmebeitrag in einer einzelnen Phase als Differenz MAX - MIN berücksichtigt und eine gebotene Abschaltung des Systems bereits bei kleinerem integriertem Summensignal Si vorgenommen - indem nämlich das Vergleichssignal C aus dem integriertem Summensignal Si vermehrt um die Differenz MAX - MIN gebildet wird.

Durch die Differenzbildung in den Subtrahieren 3 wird außerdem ein Problem vermieden, das beim Einsatz der ersten und zweiten Integrierer 4,5 ansonsten drohen würde. Solche Integrierer 4,5 können durch numerische Ungenauigkeiten wie z.B. Rundungsfehler "überlaufen", wenn kleinste Fehler stets zu kleinen positiven Beiträgen führen. Durch die erwähnte Differenzbildung erhalten die ersten und zweiten Integrierer nur dann positive Werte, wenn tatsächlich mehr Wärme entsteht als dauerhaft abgeführt werden kann. Nur dann sind die Signale U', V', W' bzw. S positiv. Der Inhalt der ersten und zweiten Integrierer 4,5 wächst also nur, wenn eine der beiden Nennverlustleistungen Pnom oder Pnom1 überschritten wird.

Enthalten alle Integrierer 4, 5 den Wert Null, geht das zugrundeliegende Modell davon aus, dass das System seine Nenntemperatur, also die dauerhaft zulässige Betriebstemperatur aufweist, auch wenn die tatsächliche Temperatur niedriger liegen kann, etwa bei der Umgebungstemperatur.

Zur Parametrierung der Vorrichtung sollten Eingabemittel zur Verfügung stehen, mit denen die Parameter Pnom, Pnom1 und G im ersten, zweiten und dritten Speicher 10, 11, 12 geändert und an das jeweils zu überwachende System angepasst werden können.

Passende Parameter Pnom, Pnom1 und G können z.B. anhand von Versuchen gefunden und optimiert werden. Ausgangspunkte solcher Versuche kann beispielsweise das Datenblatt des verwendeten Motors liefern.

Es ist auch möglich, anhand eines thermischen Modells, wie es in der eingangs erwähnten US3808503 beschrieben ist, geeignete Parameter Pnom, Pnom1 und G aufzufinden. Ein solches Modell muss allerdings die Wärmekapazität einer einzelnen Phase U, V, W anhand einer Kapazität und den Wärmewiderstand zwischen einer einzelnen Phase U, V, W und einer Wärmesenke anhand eines Widerstandes modellieren.

Die beschriebene Vorrichtung lässt sich als Software in herkömmliche Geräte zur Ansteuerung von Elektromotoren integrieren. Solche Geräte werden z.B. als Controller, Drives, Steuerungen oder Numerische Steuerungen bezeichnet und verfügen bereits über die notwendige Hardware, um entsprechende Überwachungsprogramme ablaufen zu lassen. Auch die benötigte Erfassung der Stromwerte ist in diesen Geräten üblicherweise zu Regelungszwecken bereits vorhanden. Die Erfindung lässt sich auf solchen Geräten ohne zusätzlich Aufwand an Hardware realisieren.

## Patentansprüche

1. Vorrichtung zum Schutz eines mit wenigstens zwei Phasenströmen (U, V, W) arbeitenden Systems vor thermischer Überlastung, mit wenigstens zwei Quadrieren (1) zum Quadrieren der einzelnen Phasenströme (U, V, W) und wenigstens zwei ersten Integrierern (4) zum Integrieren von aus den quadrierten Phasenströmen (U, V, W) abgeleiteten Signalen (U', V', W'), **gekennzeichnet durch** einen zweiten Integrierer (5) zum Integrieren eines von der Summe aller quadrierten Phasenströme (U, V, W) abgeleiteten Summensignals (S), sowie **durch** eine Verknüpfung (6, 7, 8) der Ausgangssignale (Ui, Vi, Wi, Si) der ersten und zweiten Integrierer (4, 5) zum Feststellen einer thermischen Überlastung des Systems.

2. Vorrichtung nach Anspruch 1, **dadurch gekennzeichnet, dass** die Verknüpfung einen Maximumbildner (6) und einen Minimumbildner (7) zum Feststellen und Ausgeben des größten (MAX) bzw. des kleinsten (MIN) der Ausgänge (Ui, Vi, Wi) der ersten Integrierer (4) umfasst.

3. Vorrichtung nach Anspruch 2, **dadurch gekennzeichnet, dass** die Verknüpfung (6, 7, 8) einen Verknüpfer (8) umfasst, der mit dem Ausgang (MAX) des Maximumbildners (6) und dem Ausgang (MIN) des Minimumbildners (7) verbunden ist.

4. Vorrichtung nach Anspruch 3, **dadurch gekennzeichnet, dass** der Verknüpfer (8) mit dem Ausgang (Si) des zweiten Integrierers (5) verbunden ist.

5. Vorrichtung nach Anspruch 3 und 4, **dadurch gekennzeichnet, dass** durch den Verknüpfer (8) ein Vergleichssignal (C) abgebbar ist, das aus der Summe des Ausgangs (Si) des zweiten Integrierers (5) und des Ausgangs (MAX) des Maximumbildners (6) abzüglich des Ausgangs (MIN) des Minimumbildners (7) besteht.

6. Vorrichtung nach Anspruch 5, **dadurch gekennzeichnet, dass** die Verknüpfung einen Auswerter (9) mit einem Vergleicher (13) zum Vergleichen des Vergleichssignals (C) mit einem in einem dritten Speicher (12) gespeicherten Grenzwert (G) umfasst.

7. Vorrichtung nach Anspruch 6, **dadurch gekennzeichnet, dass** der Auswerter (9) ein Mittel (14) zum Abschalten oder Absenken der Phasenströme (U, V, W) umfasst, das unter der Bedingung C > G aktivierbar ist.

8. Vorrichtung nach einem der vorhergehenden Ansprüche, **dadurch gekennzeichnet, dass** die aus den quadrierten Phasenströmen (U, V, W) abgeleiteten Signale (U', V', W') aus den quadrierten Phasenströmen (U, V, W) abzüglich eines in einem zweiten Speicher (11) gespeicherten Parameters (Pnom1) bestehen.

9. Vorrichtung nach Anspruch 8, **dadurch gekennzeichnet, dass** der Parameter (Pnom1) im zweiten Speicher (11) der Nennverlustleistung einer Phase (U, V, W) bei einer Frequenz der Phasenströme (U, V, W) von 0 Hz proportional ist.

10. Vorrichtung nach einem der vorhergehenden Ansprüche, **dadurch gekennzeichnet, dass** das Summensignal S aus der Summe aller quadrierten Phasenströme (U, V, W) abzüglich eines in einem ersten Speicher (10) gespeicherten Parameters (Pnom) besteht.

11. Vorrichtung nach Anspruch 10, **dadurch gekennzeichnet, dass** der Parameter (Pnom) im ersten Speicher (10) einer Nennverlustleistung des Systems bei Frequenzen der Phasenströme (U, V, W) größer Null proportional ist.

12. Vorrichtung nach einem der vorhergehenden Ansprüche, **dadurch gekennzeichnet, dass** die Summe der Phasenströme (U, V, W) im Betriebszustand des Systems Null ist.

13. Vorrichtung nach einem der vorhergehenden Ansprüche, **dadurch gekennzeichnet, dass** die Ausgänge (Ui, Vi, Wi, Si) der ersten und zweiten Integrierer (4, 5) keine negativen Werte annehmen und so bei Null nach unten limitiert sind.

14. Vorrichtung nach einem der vorhergehenden Ansprüche, **dadurch gekennzeichnet, dass** die Vorrichtung Eingabemittel zum Ändern der Inhalte des ersten, zweiten und dritten Speichers (10, 11, 12) aufweist.

15. Vorrichtung nach einem der vorhergehenden Ansprüche, **dadurch gekennzeichnet, dass** System ein Elektromotor, insbesondere ein Synchronmotor ist.

16. Vorrichtung nach einem der Ansprüche 1 - 14, **dadurch gekennzeichnet, dass** das System eine Leistungsendstufe eines Wechselrichters zum Betreiben eines Elektromotors, insbesondere eines Synchronmotors ist.

## Claims

1. A device for protecting a system operating with at least two phase currents (U, V, W) against thermal overload, comprising at least two squaring units (1) for squaring the individual phase currents (U, V, W) and at least two first integrators (4) for integrating signals (U', V', W') derived from the squared phase currents (U, V, W), **characterized by** a second integrator (5) for integrating a summation signal (S), which is derived from the sum of all of the squared phase currents (U, V, W) as well as by a combination (6, 7, 8) of the output signals (Ui, Vi, Wi, Si) of the first and second integrators (4, 5) for determining a thermal overload of the system.

2. The device according to claim 1, **characterized in that** the combination comprises a maximum former (6) and a minimum former (7) for determining and outputting the largest (MAX) or the smallest (MIN) of the outputs (Ui, Vi, Wi), respectively, of the first integrator (4).

3. The device according to claim 2, **characterized in that** the combination (6, 7, 8) comprises a combiner (8), which is connected to the output (MAX) of the maximum former (6) and to the output (MIN) of the minimum former (7).

4. The device according to claim 3, **characterized in that** the combiner (8) is connected to the output (Si) of the second integrator (5).

5. The device according to claim 3 and 4, **characterized in that** a comparison signal (C), which consists of the sum of the output (Si) of the second integrator (5) and of the output (MAX) of the maximum former (6) minus the output (MIN) of the minimum former (7), can be delivered by the combiner (8).

6. The device according to claim 5, **characterized in that** the combination comprises an evaluator (9) with a comparator (13) for comparing the comparison signal (C) with a threshold value (G), which is stored in a third memory (12).

7. The device according to claim 6, **characterized in that** the evaluator (9) comprises a means (14) for turning off or lowering the phase currents (U, V, W), said means being capable of being activated under the condition C > G.

8. The device according to one of the preceding claims, **characterized in that** the signals (U', V', W'), which are derived from the squared phase currents (U, V, W), consist of the squared phase currents (U, V, W) minus a parameter (Pnom1), which is stored in a second memory (11).

9. The device according to claim 8, **characterized in that** the parameter (Pnom1) in the second memory (11) is proportional to the nominal thermal power loss of a phase (U, V, W) at a frequency of the phase currents (U, V, W) of 0 Hz.

10. The device according to one of the preceding claims, **characterized in that** the summation signal S consists of the sum of all of the squared phase currents (U, V, W) minus a parameter (Pnom), which is stored in a first memory (10).

11. The device according to claim 10, **characterized in that** the parameter (Pnom) in the first memory (10) is proportional to a nominal thermal power loss of the system at frequencies of the phase currents (U, V, W) of greater than zero.

12. The deice according to one of the preceding claims, **characterized in that** the sum of the phase currents (U, V, W) in the operating state of the system is zero.

13. The device according to one of the preceding claims, **characterized in that** the outputs (Ui, Vi, Wi, Si) of the first and second integrators (4, 5) do not assume any negative values and are thus limited downward in the event that they are zero.

14. The device according to one of the preceding claims, **characterized in that** the device encompasses input means for changing the contents of the first, second and third memory (10, 11, 12).

15. The device according to one of the preceding claims, **characterized in that** the system is an electric motor, in particular a synchronous motor.

16. The device according to one of claims 1-14, **characterized in that** the system is a power output stage of an inverter for operating an electric motor, in particular of a synchronous motor.

## Revendications

1. Procédé pour la protection d'un système opérant avec au moins deux courants de phase (U, V, W) contre une surcharge thermique, avec au moins deux élévateurs au carré (1) pour l'élévation au carré des différents courants de phase (U, V, W) et au moins deux intégrateurs incrémentiels (4) pour l'intégration de signaux (U', V', W') dérivés des courants de phase (U, V, W) élevés au carré, **caractérisé par** un deuxième intégrateur (5) pour l'intégration d'un signal de somme (S) dérivé de la somme de tous les courants de phase (U, V, W) élevés au carré, et par combinaison (6, 7, 8) des signaux de sortis (Ui, Vi, Wi, Si) du premier et du deuxième intégrateurs (4, 5), pour constater une surcharge thermique du système.

2. Dispositif selon la revendication 1, **caractérisé en ce que** la combinaison comprend un dispositif de formation de maximum (6) et un dispositif de formation de minimum (7) pour constater et émettre la plus grande (MAX) ou la plus petite (MIN) des sorties (Ui, Vi, Wi) de l'intégrateur (4).

3. Dispositif selon la revendication 2, **caractérisé en ce que** la combinaison (6, 7, 8) comprend un combinateur (8) relié à la sortie (MAX) du dispositif de formation de maximum (6) et à la sortie (MIN) du dispositif de formation de minimum (7).

4. Dispositif selon la revendication 3, **caractérisé en ce que** le combinateur (8) est relié à la sortie (Si) du deuxième intégrateur (5).

5. Dispositif selon l'une des revendications 3 et 4, **caractérisé en ce que** le combinateur (8) permet d'émettre un signal de comparaison (C) constitué de la somme de la sortie (Si) du deuxième intégrateur (5) et de la sortie (MAX) du dispositif de formation de maximum (6), moins la sortie (MIN) du dispositif de formation de minimum (7).

6. Dispositif selon la revendication 5, **caractérisé en ce que** la combinaison comprend un dispositif d'évaluation (9) avec un comparateur (13) pour la comparaison du signal de comparaison (C) avec une valeur seuil (G) enregistrée dans une troisième mémoire (12).

7. Dispositif selon la revendication 6, **caractérisé en ce que** le dispositif d'évaluation (9) comprend un moyen (14) pour éteindre ou diminuer les courants de phase (U, V, W), activable sous la condition C > G.

8. Dispositif selon l'une des revendications précédentes, **caractérisé en ce que** les signaux (U', V', W') dérivés des courants de phase (U, V, W) élevés au carré sont constitués des courants de phase (U, V, W) moins le paramètre (Pnom1) enregistré dans une deuxième mémoire (11).

9. Dispositif selon la revendication 8, **caractérisé en ce que** le paramètre (Pnom1) dans la deuxième mémoire (11) est proportionnel à une dissipation nominale d'une phase (U, V, W), lorsque la fréquence des courants de phase (U, V, W) est égale à zéro.

10. Dispositif selon l'une des revendications précédentes, **caractérisé en ce que** le signal de somme S est constitué de la somme de tous les courants de phase (U, V, W) élevés au carré, moins l'un des paramètres (Pnom) enregistrés dans une première mémoire (10).

11. Dispositif selon la revendication 10, **caractérisé en ce que** le paramètre (Pnom) dans la première mémoire (10) est proportionnel à une dissipation nominale du système, lorsque les fréquences des courants de phase (U, V, W) sont supérieures à zéro.

12. Dispositif selon l'une des revendications précédentes, **caractérisé en ce que** la somme des courants de phase (U, V, W) est égale à zéro à l'état de marche du système.

13. Dispositif selon l'une des revendications précédentes, **caractérisé en ce que** les sorties (Ui, Vi, Wi, Si) du premier et du deuxième intégrateurs (4, 5) n'admettent pas de valeurs négatives et sont ainsi limités vers le bas à zéro.

14. Dispositif selon l'une des revendications précédentes, **caractérisé en ce que** le dispositif comporte des moyens de saisie pour la modification du contenu de la première, de la deuxième et de la troisième mémoire (10, 11, 12).

15. Dispositif selon l'une des revendications précédentes, **caractérisé en ce que** le système est un moteur électrique, en particulier un moteur synchrone.

16. Dispositif selon l'une des revendications 1 à 14, **caractérisé en ce que** le système est un étage final de puissance d'un onduleur pour le fonctionnement d'un moteur électrique, en particulier d'un moteur synchrone.
